# EUROPÄISCHE PATENTSCHRIFT

(11) **EP 4 106 942 B1**
(45) Veröffentlichungstag und Bekanntmachung des Hinweises auf die Patenterteilung: **13.05.2026**
(21) Anmeldenummer: 21704166.4
(22) Anmeldetag: 01.02.2021
(51) Int. Cl.: B23K 20/12, B23K 20/227, B23K 101/04, B23K 103/04

(54) **RÜHRREIBSCHWEISSWERKZEUG, VERFAHREN ZUR HERSTELLUNG EINES SOLCHEN WERKZEUGES, UND VERFAHREN ZUM VERBINDEN VON BAUTEILEN MIT EINEM SOLCHEN WERKZEUG**
FRICTION STIR WELDING TOOL, METHOD FOR MANUFACTURING THE TOOL, AND METHOD OF ASSEMBLING WORKPIECES WITH SUCH TOOL
OUTIL DE SOUDAGE PAR FRICTION MALAXAGE, PROCÉDÉ DE FABRICATION D'UN TEL OUTIL, ET PROCÉDÉ D'ASSEMBLAGE DE PIÈCES AVEC UN TEL OUTIL

(30) Priorität: 20.02.2020 AT 501252020
(43) Veröffentlichungstag der Anmeldung: 28.12.2022
(73) Patentinhaber: Stirtec GmbH, 8141 Premstätten (AT)
(72) Erfinder: FIGNER, Gunter, 8043 Graz (AT); CALISKANOGLU, Ozan, 8010 Graz (AT); OPPENEIGER, Lucas, 8020 Graz (AT); PFEIFFER, Christian, 8010 Graz (AT)
(74) Vertreter: Wirnsberger & Lerchbaum Patentanwälte OG
(86) Internationale Anmeldenummer: PCT/AT2021/060035
(87) Internationale Veröffentlichungsnummer: WO 2021/163742

(56) Entgegenhaltungen:
- WO-A2-2007/140043
- WO-A2-2008/102209
- CN-A- 110 216 365
- US-A1- 2010 288 817
- US-A1- 2014 299 651

## Beschreibung

Die Erfindung betrifft ein Rührreibschweißwerkzeug, welches einen Pin und eine starr mit dem Pin verbundene Schulter aufweist, zum Verschweißen von aus einem durch einen Stahl gebildeten Grundwerkstoff mit einem Schmelzpunkt von mehr als 900 °C bestehenden Bauteilen entsprechend dem Oberbegriff des Anspruchs 1 (siehe z.B. WO 2008/102209 A2).

Weiter betrifft die Erfindung ein Verfahren zur Herstellung eines Rührreibschweißwerkzeuges mit einem Pin und einer Schulter, mit welchem Bauteile aus einem durch einen Stahl gebildeten Grundwerkstoff, welcher eine Schmelztemperatur von mehr als 900 °C aufweist. mittels Rührreibschweißen verbindbar sind, siehe Anspruch 6.

Darüber hinaus betrifft die Erfindung ein Verfahren zum Verbinden von Bauteilen aus einem durch einen Stahl, insbesondere einen Baustahl, gebildeten Grundwerkstoff oder mehreren durch einen Stahl, insbesondere einen Baustahl, gebildeten Grundwerkstoffen mit einer Schmelztemperatur von mehr als 900 °C durch Rührreibschweißen, siehe Anspruch 13.

Rührreibschweißwerkzeuge zur Verbindung von Bauteilen mit einer Schmelztemperatur von mehr als 900 °C, zur Verbindung von Bauteilen aus einem Stahl oder mehreren verschiedenen Stahl-Legierungen, sind aus dem Stand der Technik bekannt. Derartige Werkzeuge weisen einen Pin sowie eine in der Regel senkrecht zum Pin angeordnete Schulter auf. Bei der Verbindung zweier nebeneinander angeordneter Bauteile wird über die Schulter eine Druckkraft auf die zu verbindenden Bauteile aufgebracht. Gleichzeitig erfolgt aufgrund einer Drehung des Rührreibschweißwerkzeuges relativ zu den Bauteilen um eine Rotationsachse eine Erwärmung der Bauteile, sodass die Bauteile im Bereich des Rührreibschweißwerkzeuges in einer Fügezone plastifiziert und vermischt werden, wodurch die Verbindung erfolgt. Der Pin gewährleistet dabei ein Verrühren des plastifizierten Werkstoffes in der Fügezone und ist somit während des Rührreibschweißens großen mechanischen und thermischen Belastungen ausgesetzt, während die Schulter des Rührreibschweißwerkzeuges für einen Großteil der Wärmegenerierung verantwortlich ist. Eine Größe der Schulter ergibt dabei in der Regel durch eine maximale Flächenpressung unter der Schulter und eine erforderliche Druckkraft in axialer Richtung auf die zu verbindenden Bauteile.

Es hat sich gezeigt, dass Werkstoffe, die günstige Eigenschaften zum Einsatz als Pin-Werkstoff aufweisen, beispielsweise eine hohe Schmelztemperatur, bei Einsatz in einem Rührreibschweißwerkzeug an der Schulter aufgrund einer zu großen Reibung mit dem Grundwerkstoff der zu verbindenden Bauteile zu einer zu hohen oder zu geringen Wärmegenerierung führen, wodurch keine optimale Schweißnaht erreicht wird.

Um eine zu hohe oder zu niedrige Temperatur während des Schweißverfahrens zu vermeiden, ist es aus dem Stand der Technik bekannt, die Schulter entsprechend größer oder kleiner auszubilden. Dies führt allerdings über eine nicht optimale Pressung in der Fügezone wiederum zu Problemen bei einer Qualität der Schweißverbindung.

Weiter ist es aus dem Stand der Technik bekannt, die Schulter und den Pin aus separaten Bauteilen auszubilden und die Schulter mit einer anderen Geschwindigkeit als den Pin anzutreiben, um die Wärmeeinbringung über die Schulter unabhängig von einer Größe der Schulter über die Rotationsgeschwindigkeit der Schulter zu beeinflussen. Es hat sich allerdings gezeigt, dass dadurch zwar beim Verschweißen von Aluminium und anderen Werkstoffen mit niedriger Schmelztemperatur der gewünschte Effekt erzielbar ist, allerdings beim Verschweißen von Grundwerkstoffen mit einer Schmelztemperatur von mehr als 900 °C, wie beispielsweise Stahl, plastifiziertes Material aus der Fügezone in einen Spalt zwischen dem Pin und der Schulter eindringt und zu einer Beschädigung des Werkzeuges und somit einer geringen Standzeit desselben führt.

Hier setzt die Erfindung an. Aufgabe ist es, ein Rührreibschweißwerkzeug der eingangs genannten Art anzugeben, mit welchem auch bei gegebener Geometrie des Rührreibschweißwerkzeuges eine besonders hohe Qualität der Schweißverbindung bei gleichzeitig sehr langer Standzeit des Werkzeuges erreichbar ist.

Darüber hinaus soll ein Verfahren zur Herstellung eines Rührreibschweißwerkzeuges der eingangs genannten Art angegeben werden, mit welchem ein derartiges Rührreibschweißwerkzeug herstellbar ist.

Schließlich soll ein Verfahren zum Verbinden von Bauteilen der eingangs genannten Art angegeben werden, mit welchem eine besonders hohe Qualität der Verbindung auf effiziente Weise erreichbar ist.

Einem ersten Aspekt der Erfindung entsprechend ist ein Rührreibschweißwerkzeug im Anspruch 1 definiert.

Im Rahmen der Erfindung wurde erkannt, dass die Nachteile von Rührreibschweißwerkzeuge des Standes der Technik überwunden werden können, wenn das Rührreibschweißwerkzeug im Bereich der Schulter zumindest teilweise aus einem anderen Material als in einem Bereich des Pins besteht. Das erste Material unterscheidet sich vom zweiten Material, mit welchem das erste Material starr verbunden ist, üblicherweise in Bezug auf eine chemische Zusammensetzung, in Bezug auf mechanische und/oder thermische Eigenschaften. Dadurch kann abhängig von einem gewünschten Einsatzzweck ein optimiertes Rührreibschweißwerkzeug auf einfache Weise gebildet werden.

Günstig ist es, wenn das erste Material eine Schmelztemperatur von mehr als 900 °C, vorzugsweise mehr als 2000 °C, aufweist.

Bevorzugt ist vorgesehen, dass das zweite Material eine Schmelztemperatur von mehr als 900 °C, vorzugsweise mehr als 2000 °C, insbesondere mehr als 3000 °C, aufweist. Dadurch kann eine besondere lange Standzeit des Rührreibschweißwerkzeuges erreicht werden. Üblicherweise ist die Schmelztemperatur des zweiten Materials höher als die Schmelztemperatur des ersten Materials.

Es hat sich bewährt, dass das erste Material und das zweite Material unterschiedliche Festigkeiten aufweisen. Dadurch kann ein besonders gut an geforderte Bedingungen angepasstes Werkzeug erreicht werden, zumal eine besonders hohe Festigkeit insbesondere im Bereich des Pins üblicherweise erforderlich ist, während im Bereich der Schulter häufig eine geringere Festigkeit ausreichend ist.

Entsprechend der Erfindung weist eine Werkstoffpaarung des ersten Materials mit dem Grundwerkstoff einen ersten Gleitreibungskoeffizienten auf. Entsprechend der Erfindung weist ferner eine Werkstoffpaarung des zweiten Materials mit dem Grundwerkstoff einen zweiten Gleitreibungskoeffizienten auf.

Der erste Gleitreibungskoeffizient ist geringer als der zweite Gleitreibungskoeffizienten entsprechend der Erfindung.

Dadurch kann das Werkzeug derart ausgebildet sein, dass dieses beispielsweise im Bereich der Schulter einen geringeren Gleitreibungskoeffizienten als im Bereich des Pins aufweist. Somit wird auf einfache Weise sichergestellt, dass zwar über die Schulter eine ausreichend hohe Presskraft bei gleichzeitig geringer Flächenpressung einbringbar ist, wobei dennoch keine zu große Wärmegenerierung erfolgt und auch im Bereich des Pins eine Reibung ausreicht, um die plastifizierten Bauteile in der Fügezone für eine besonders gute Verbindung zu verrühren.

Abhängig von gewünschten Bedingungen während des Schweißverfahrens bzw. einer erforderlichen Presskraft an der Schulter können die Materialien natürlich auch derart gewählt werden, dass der erste Gleitreibungskoeffizient größer als der zweite Gleitreibungskoeffizient ist.

Wenngleich vorgesehen sein kann, dass die Schulter gänzlich durch das erste Material und der Pin gänzlich durch das zweite Material gebildet ist, ist es auch möglich, die Schulter nur teilweise durch das erste Material und teilweise durch das zweite Material und gegebenenfalls ein oder mehrere weitere Materialien auszubilden. Analog kann auch der Pin nur teilweise durch das zweite Material und das erste Material und gegebenenfalls weitere Materialien gebildet sein. Durch eine entsprechende Aufteilung des Bereichs der Schulter bzw. des Pins in Teilbereiche, welche aus unterschiedlichen Materialien mit unterschiedlichen Gleitreibungskoeffizienten zum Grundwerkstoff bestehen, ist es somit auf einfache Weise möglich, sowohl im Bereich der Schulter als auch im Bereich des Pins einen gewünschten Gleitreibungskoeffizienten zu erreichen, wobei sich ein mittlerer Gleitreibungskoeffizient der Schulter üblicherweise von einem mittleren Gleitreibungskoeffizienten des Pins unterscheidet.

Dies kann beispielsweise dadurch erreicht werden, dass das erste Teil ringförmig ausgebildet ist, wobei eine Außendurchmesser dieses ersten Teiles dem Schulter-Außendurchmesser entspricht, jedoch ein Innendurchmesser dieses ersten Teiles größer als ein Schulter-Innendurchmesser ausgebildet ist, welcher Schulter-Innendurchmesser mit einem Pin-Außendurchmesser zusammenfallen kann. Das erste Material erstreckt sich dann im Bereich der Schulter vom Schulter-Außendurchmesser bis zum Innendurchmesser des ersten Teiles über einen ersten Teilbereich der Schulter und das zweite Material im Bereich der Schulter vom Innendurchmesser des ersten Teiles bis zum Schulter-Innendurchmesser bzw. bis zum Pin. Darüber hinaus kann auch der Pin durch das zweite Material gebildet sein, sodass das zweite Teil einen zweiten Teilbereich der Schulter und den Pin teilweise oder gänzlich bilden kann.

Normalerweise ist ein mittlerer Gleitreibungskoeffizient der Schulter geringer als ein mittlerer Gleitreibungskoeffizient des Pins. Ein mittlerer Gleitreibungskoeffizient kann dabei über einen entsprechenden Flächenanteil erreicht werden. Sofern der Gleitreibungskoeffizient auch abhängig von einer Relativgeschwindigkeit des Rührreibschweißwerkzeuges relativ zum Grundwerkstoff ist, kann auch die Geschwindigkeit der jeweiligen Flächenteile während des Rührreibschweißverfahrens bei der Wahl jenes Teilbereiches der Schulter berücksichtigt werden, welcher aus dem ersten bzw. dem zweiten Material besteht.

Wenngleich eine rechnerische Bestimmung des erreichbaren mittleren Gleitreibungskoeffizienten über die Flächen, welche aus den einzelnen Materialien ausgebildet werden, bevorzugt ist, kann ein entsprechendes Rührreibschweißwerkzeug natürlich auch dadurch gebildet werden, dass eine für eine gewünschte Schweißnahtqualität erforderliche Zusammensetzung des Bereichs der Schulter, also eine Größe jenes Teilbereiches der Schulter, welcher aus dem ersten Material und gegebenenfalls aus einem zweiten und/oder dritten Material besteht, in Versuchen ermittelt wird.

Bevorzugt ist vorgesehen, dass das erste Material eine andere, insbesondere eine geringere, chemische Affinität zum Grundwerkstoff als das zweite Material aufweist. Als chemische Affinität wird hier die Neigung des jeweiligen Materials bezeichnet, sich mit dem Grundwerkstoff zu verbinden. So ist es im Bereich des Pins vorteilhaft, wenn eine hohe chemische Affinität besteht, um ein gutes Verrühren und somit eine hohe Festigkeit der Schweißverbindung zu erreichen. Im Bereich der Schulter kann eine geringere Affinität als im Bereich des Pins vorteilhaft sein, um eine Schweißnaht mit glatter Oberfläche zu erreichen und eine zu hohe Wärmeeinbringung sowie einen zu hohen Verschleiß des Rührreibschweißwerkzeuges im Bereich der Schulter zu vermeiden. Es ist daher günstig, wenn das erste Material eine geringere chemische Affinität zum Grundwerkstoff als das zweite Material aufweist.

Zur Bildung des Rührreibschweißwerkzeuges kann das erste Material grundsätzlich in jeder beliebigen Weise mit dem zweiten Material verbunden werden, beispielsweise mittels eines kraftschlüssigen, eines formschlüssigen und/oder eines stoffschlüssigen Verbindungsverfahrens. Beispielsweise kann das Rührreibschweißwerkzeug grundsätzlich aus dem zweiten Material bestehen und im Bereich der Schulter teilweise oder vollständig mit dem ersten Material beschichtet werden. Auch ist es denkbar, dass das erste Material im Bereich der Schulter mittels Auftragsschweißen auf einen aus dem zweiten Material bestehenden, größeren Teilbereich des Rührreibschweißwerkzeuges aufgebracht wird.

Analog ist es natürlich auch möglich, dass der aus einem zweiten Material bestehende Pin oder ein aus dem zweiten Material bestehender Teilbereich des Pins mit einem aus dem ersten Material bestehenden, größeren ersten Teil des Rührreibschweißwerkzeuges verbunden wird, insbesondere kraftschlüssig, formschlüssig und/oder stoffschlüssig, beispielsweise durch Aufschweißen oder Einschrauben.

Bevorzugt weist das Rührreibschweißwerkzeug einen aus dem ersten Material bestehenden Ring auf, welcher mittels eines Schweißverfahrens, insbesondere eines Reibschweißverfahrens mit einem aus dem zweiten Material bestehenden zweiten Teil verbunden ist, welches den Pin und einen nicht durch den Ring gebildeten Teilbereich der Schulter bildet. Der aus dem ersten Material bestehende Ring kann ein äußeres Ende der Schulter bilden oder auch in einer Nut angeordnet sein, sodass der Ring einen mittleren oder inneren ersten Teilbereich der Schulter bildet.

Es versteht sich, dass ein aus dem ersten Material gebildeter erster Teil des Rührreibschweißwerkzeuges oder ein aus dem zweiten Material gebildeter zweiter Teil des Rührreibschweißwerkzeuges auch einen Schaft des Rührreibschweißwerkzeuges zumindest teilweise oder vollständig bilden kann.

Insbesondere zur Kostenoptimierung kann auch vorgesehen sein, dass das Rührreibschweißwerkzeug einen Schaft aufweist, welcher ein drittes Material aufweist, insbesondere durch ein drittes Material gebildet ist. Dadurch kann beispielsweise ein Einsatz von kostenintensiven Materialien, welche für die Schulter und den Pin eingesetzt werden, minimiert werden, wodurch das Rührreibschweißwerkzeug mit besonders geringen Kosten herstellbar. Die einzelnen Bestandteile, insbesondere Pin-Bereich, Schulter-Bereich und Schaft-Bereich, des Rührreibschweißwerkezeuges können miteinander auf jede mögliche form-, kraft- und/oder stoffschlüssige Weise verbunden sein, beispielsweise durch Reibschweißen.

Natürlich kann abhängig von einem oder mehreren verschiedenen Grundwerkstoffen, aus welchen die zu verschweißenden Bauteile in den zu verschweißenden Bereichen bestehen, das Rührreibschweißwerkzeug unterschiedlichste Materialien aufweisen und das erste Material durch ein grundsätzlich beliebiges Material gebildet sein. Insbesondere zur Erreichung günstiger Reibeigenschaften an der Schulter hat es sich besonders bewährt, wenn das erste Material Molybdän enthält, insbesondere als Molybdän-Legierung ausgebildet ist.

Auch das zweite Material kann grundsätzlich aus jedem beliebigen, für einen entsprechenden Einsatzzweck geeigneten Material gebildet sein. Um eine besonders hohe Standzeit auch bei in der Fügezone auftretenden hohen Temperaturen zu erreichen, ist bevorzugt vorgesehen, dass das zweite Material Wolfram enthält, insbesondere durch Wolfram-Rhenium gebildet ist.

Um entsprechend vorteilhafte Eigenschaften zu erreichen, kann auch vorgesehen sein, dass das erste Material und/oder das zweite Material einen Keramikwerkstoff, insbesondere einen Oxid-Keramikwerkstoff und/oder einen Nicht-Oxid-Keramikwerkstoff wie Carbide, Nitride oder Silicide, aufweist oder durch einen solchen Werkstoff gebildet ist.

Eine besonders hohe Standzeit kann erreicht werden, wenn das erste Material und/oder das zweite Material ein Refraktärmetall, eine Refraktärmetalllegierung, eine Nickellegierung, eine Cobaltlegierung und/oder eine Eisenlegierung aufweist oder durch einen solchen Werkstoff gebildet ist. Refraktärmetalle, also unedle Metalle der 4., der 5. sowie der 6. Nebengruppe, Titan, Zirconium, Hafnium, Vanadium, Niob, Tantal, Chrom, Molybdän und Wolfram, weisen eine besondere hohe Schmelztemperatur und günstige mechanische Eigenschaften für eine Anwendung als Rührreibschweißwerkzeug auf.

Einem zweiten Aspekt der Erfindung entsprechend ist ein Verfahren zur Herstellung eines Rührreibschweißwerkzeugs mit einem Pin und einer Schulter im Anspruch 6 definiert.

Dadurch können Eigenschaften des Rührreibschweißwerkzeuges im Bereich der Schulter unabhängig von Eigenschaften im Bereich des Pins auf einfache Weise erreicht werden. Grundsätzlich kann das erste Teil zur Bildung des Rührreibschweißwerkzeuges auf beliebige Weise mit dem zweiten Teil verbunden werden, beispielsweise durch eine kraftschlüssige und/oder formschlüssige Verbindung. Besonders bevorzugt ist jedoch vorgesehen, dass das erste Teil stoffschlüssig mit dem zweiten Teil verbunden wird. Dadurch ist eine besonders robuste Verbindung erreicht.

Wenngleich das erste Teil mit dem zweiten Teil bzw. das zweite Teil mit dem ersten Teil grundsätzlich auf jede beliebige stoffschlüssige Weise verbunden werden kann, beispielsweise durch Sintern, ein 3D-Druckverfahren oder dergleichen, ist bevorzugt vorgesehen, dass das erste Teil mit dem zweiten Teil verschweißt wird. Im Unterschied zu einem Sinter-Verfahren, einem Beschichtungsverfahren oder einem 3D-Druckverfahren ist es somit nicht zwingend erforderlich, dass eine Außenkontur des ersten Teiles während des Verfahrens gänzlich geändert bzw. das erste Teil gänzlich aufgeschmolzen wird. So kann auch vorgesehen sein, dass das erste Teil und das zweite Teil während des Verfahrens zur Bildung der Rührreibschweißwerkzeuges eine Außenkontur im Wesentlichen beibehalten. Beispielsweise kann das erste Teil somit als Ring ausgebildet sein, welcher auf das zweite Teil, welches den Pin und einen Teil der Schulter, insbesondere mit einer Nut für das erste Teil, aufweist, aufgeschweißt wird. Das Schweißen kann wiederum auf verschiedenste aus dem Stand der Technik bekannte Weisen erfolgen, beispielsweise durch Laserschweißen, Diffusionsschweißen, Elektronenstrahlschweißen oder dergleichen.

Es hat sich gezeigt, dass eine besonders robuste Verbindung zwischen dem ersten Teil und dem zweiten Teil erreichbar ist, wenn das erste Teil durch ein Reibschweißverfahren mit dem zweiten Teil verbunden wird.

Bevorzugt ist vorgesehen, dass das erste Teil mit dem zweiten Teil durch ein Pressschweißverfahren verbunden wird. Darüber hinaus ist natürlich auch eine Kombination eines Reibschweißverfahrens mit einem Pressschweißverfahren denkbar.

Es hat sich bewährt, dass abhängig von einem gewünschten mittleren Gleitreibungskoeffizienten, welcher bei einem Kontakt der Schulter mit dem Grundwerkstoff wirkt und zwischen einem ersten Gleitreibungskoeffizienten, welchen eine Werkstoffpaarung des ersten Materials mit dem Grundwerkstoff aufweist, und einem zweiten Gleitreibungskoeffizienten, welchen eine Werkstoffpaarung des zweiten Materials mit dem Grundwerkstoff aufweist, liegt, ein erster Teilbereich der Schulter durch das erste Material und ein zweiter Teilbereich der Schulter durch das zweite Material gebildet werden, um den gewünschten mittleren Gleitreibungskoeffizienten zu erreichen. Anders ausgedrückt wird somit die Größe jenes Teilbereiches der Schulter, welcher dann, wenn die Schulter nicht gänzlich durch das erste Material gebildet wird, durch das erste Material gebildet wird, abhängig davon gewählt, welcher mittlere Gleitreibungskoeffizient im Bereich der Schulter gewünscht ist. Beträgt beispielsweise ein mittlerer Gleitreibungskoeffizient des ersten Materials bei einer Werkstoffpaarung mit dem Grundwerkstoff, insbesondere bei einer Werkstoffpaarung mit Stahl, insbesondere einem hochfesten Baustahl wie dieser für Pipelinerohre eingesetzt wird, 0,1 und beträgt ein Gleitreibungskoeffizient des zweiten Materials bei einer Werkstoffpaarung mit demselben Grundwerkstoff 0,3, so kann ein mittlerer Gleitreibungskoeffizient der Schulter von beispielsweise 0,2 dadurch erreicht werden, dass eine während des Schweißvorganges in Kontakt mit den zu verschweißenden Bauteilen stehende Fläche der Schulter zu 50 % aus dem ersten Material und zu 50 % aus dem zweiten Material gebildet wird. Eine Oberfläche der Schulter besteht dann aus dem ersten Teilbereich und dem zweiten Teilbereich, wenngleich grundsätzlich natürlich auch weitere Teilbereiche aus weiteren Materialien möglich sind. Nachdem eine Geschwindigkeit der Schulter in einem pinnahen bzw. rotationsachsennahen Bereich geringer ist als an einem äußeren Rand und ein Gleitreibungskoeffizient auch abhängig von einer Relativgeschwindigkeit sein kann, können sich abhängig davon, ob das erste Material innen oder außen an der Schulter angeordnet ist, unterschiedliche Verhältnisse der Bereiche der Schulter ergeben, welche aus dem ersten Material und aus dem zweiten Material gebildet sind.

Um eine besonders große Wirkung bei Einsatz des ersten Materials, welches vorzugsweise einen geringeren Gleitreibungskoeffizienten als das zweite Material aufweist, zu erreichen, wird das erste Material üblicherweise an einem äußeren Rand der Schulter angeordnet, beispielsweise als Außenring. Somit ist nicht nur ein Flächenanteil der Schulter, welche durch das erste Material bzw. durch das zweite Material gebildet wird, für eine Qualität der Schweißnaht bzw. eine Wärmeeinbringung in die zu verschweißenden Bauteile relevant, sondern auch zumindest zu einem geringen Teil eine Position, an welchem die Schulter durch das erste Material bzw. durch das zweite Material gebildet wird bzw. ein Abstand der entsprechenden Position von einer Rotationsachse des Rührreibschweißwerkzeuges.

Bevorzugt ist das Rührreibschweißwerkzeug etwa rotationssymmetrisch ausgebildet.

Um eine besonders einfache Herstellung zu erreichen, ist mit Vorteil vorgesehen, dass vor einem Verbinden des ersten Teiles mit dem zweiten Teil das erste Teil mit einer Kontur gebildet wird, welche mit dem Teilbereich der Schulter korrespondiert, welcher aus dem ersten Material gebildet wird. Das erste Teil kann somit beispielsweise als Ring ausgebildet sein, welcher in einer Nut im zweiten Teil positioniert wird, um einen entsprechenden Teil der Schulter zu bilden. Grundsätzlich kann das erste Teil natürlich auch als Polygon oder dergleichen ausgebildet sein, um eine formschlüssige Verbindung mit dem zweiten Teil zu erreichen. Das zweite Teil kann sowohl einen Teil des Pins, den vollständigen Pin als auch den teilweisen oder gänzlichen Schaft des Werkzeuges bilden. Bevorzugt ist vorgesehen, dass das erste Teil eine im Wesentlichen rotationssymmetrische Außenkontur aufweist, insbesondere etwa ringförmig ausgebildet ist. Dies ermöglicht eine besonders einfache Herstellung des Rührreibschweißwerkzeuges.

Es versteht sich, dass ein erfindungsgemäß ausgebildetes Rührreibschweißwerkzeug durch ein erfindungsgemäßes Verfahren gebildet werden kann.

Einem dritten Aspekt der Erfindung entsprechend ist ein Verfahren zum Verbinden von Bauteilen unter Verwendung eines Werkzeugs entsprechend dem ersten Aspekt im Anspruch 13 definiert.

Dadurch wird eine Schweißnaht mit besonders hoher Qualität bei gleichzeitig langer Standzeit des Rührreibschweißwerkzeuges erreicht.

Wenngleich mit einem erfindungsgemäßen Rührreibschweißwerkzeug grundsätzlich beliebige Bauteile verbunden werden können, hat es sich gezeigt, dass ein entsprechendes Rührreibschweißwerkzeug besonders dazu geeignet ist, in einem entsprechenden Verfahren eingesetzt zu werden, bei welchem die zu verbindenden Bauteile rohrförmig ausgebildet sind. Beispielsweise können somit Rohre, mit welchen eine Pipeline gebildet wird, verschweißt werden, ohne während der Bildung einer entlang einer Umfangsrichtung verlaufenden Schweißnaht das Rührreibschweißwerkzeug wechseln zu müssen. Dies ist entscheidend, um die Bildung einer Pipeline, welche beispielsweise in einer Tiefe von 3000 m unter der Meeresoberfläche verlegt sein kann, auf besonders effiziente Weise zu erreichen.

Besonders bevorzugt wird das Verfahren dann eingesetzt, wenn die Bauteile eine Wandstärke von mehr als 10 mm, insbesondere mehr als 20 mm, aufweisen, wobei eine Schweißnaht sich insbesondere über eine gesamte Wandstärke erstreckt. Die üblicherweise flächig, vorzugsweise rohrförmig, ausgebildeten Bauteile werden somit vor einem Verschweißen entlang von Schmalseiten derselben aneinander gelegt, sodass die Schweißnaht, wenn sich diese von einer Fläche der Bauteile bis zu einer gegenüberliegenden Fläche der Bauteile erstreckt, eine Höhe entsprechend der Wandstärke bzw. entsprechend einer Höher der aneinander liegenden Schmalseiten der Bauteile aufweist.

Um auch bei entsprechend großen Wandstärken noch eine stabile Rührreibschweißverbindung zu erreichen, ist die Einbringung einer besonders genau definierten Wärmemenge erforderlich, zumal eine zu große oder zu kleine Wärmemenge dazu führen würde, dass die Rührreibschweißverbindung zumindest über einen Teilbereich der Schweißnahtdicke nicht optimal ist. Eine entsprechend genau definierte Wärmeeinbringung ist mit einem erfindungsgemäßen Rührreibschweißwerkzeug auf einfache Weise möglich, zumal ein Gleitreibungskoeffizient der Schulter unabhängig von einem Gleitreibungskoeffizienten und einem Material des Pins erreichbar ist.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 bis 3 verschiedene erfindungsgemäß ausgebildete Rührreibschweißwerkzeuge;
Fig. 4 ein erfindungsgemäßes Rührreibschweißwerkzeug während des Verschweißens zweier Bauteile;
Fig. 5 bis 7 weitere Rührreibschweißwerkzeuge;
Fig. 8 ein weiteres Rührreibschweißwerkzeug während des Verbindens zweiter Bauteile.

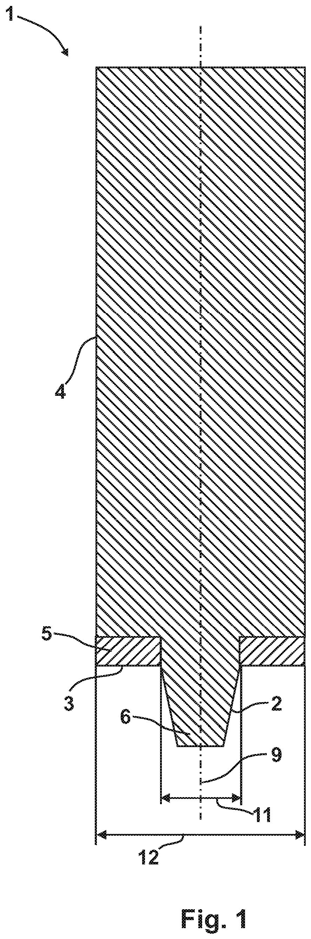

Fig. 1 zeigt einen Schnitt durch ein erfindungsgemäß ausgebildetes Rührreibschweißwerkzeug 1. Wie ersichtlich weist das im Wesentlichen rotationssymmetrisch zu einer Rotationsachse 9 ausgebildete Rührreibschweißwerkzeug 1 einen Schaft 4, einen Pin 2 und eine Schulter 3 auf, wobei die Schulter 3 etwa normal zur Rotationsachse 9 ausgerichtet ist und durch ein erstes Teil 5 aus einem ersten Material, hier eine Molybdän-Legierung, und der Pin 2 und der Schaft 4 durch ein zweites Teil 6 aus einem zweiten Material, hier Wolfram-Rhenium, gebildet sind. Das erste Teil 5 ist wie dargestellt ringförmig ausgebildet, wobei ein Innendurchmesser 13 des ersten Teiles 5 einem Pin-Außendurchmesser 11 entspricht, welcher hier wiederum dem Schulter-Innendurchmesser 13 entspricht. Ein Außendurchmesser des ringförmigen ersten Teiles 5 entspricht einem Schulter-Außendurchmesser 12. Die Schulter 3 wird somit hier gänzlich durch das erste Teil 5 bzw. das erste Material gebildet.

Aufgrund des Einsatzes von Wolfram-Rhenium im Bereich des Pins 2 wird bei einem solchen Werkzeug eine hohe Temperaturbeständigkeit erreicht. Durch den Einsatz der Molybdän-Legierung im Bereich der Schulter 3 wird beim Verschweißen von Bauteilen 7 aus einem Stahl, insbesondere aus Baustahl, an der Schulter 3 ein geringerer Gleitreibungskoeffizient als im Bereich des Pins 2 erreicht, sodass verglichen mit einem ausschließlich aus Wolfram-Rhenium bestehenden Rührreibschweißwerkzeug 1 bei gleichen Prozessparametern wie Anpressdruck in axialer Richtung, Rotationsgeschwindigkeit des Rührreibschweißwerkzeuges 1 um die Rotationsachse 9 und Vorschub eine geringere Wärmeeinbringung über die Schulter 3 erreicht wird. Im Bereich des Pins 2 ist ein höherer Gleitreibungskoeffizient, welchen die Werkstoffpaarung Wolfram-Rhenium mit Baustahl aufweist, günstig, um ein starkes Verrühren in einer Fügezone zu erreichen. Dadurch können auch Bauteile 7 mit großer Wandstärke 10 durch Rührreibschweißen miteinander in der Weise verschweißt werden, dass sowohl eine lange Standzeit des Rührreibschweißwerkzeuges 1 als auch eine hohe Qualität der Schweißverbindung erreicht werden.

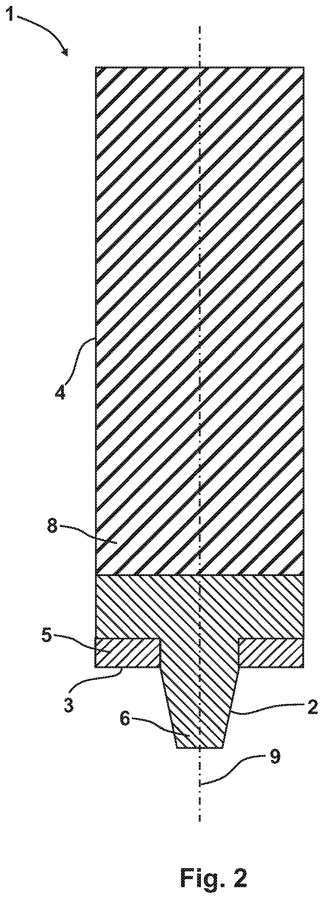

Fig. 2 zeigt ein weiteres erfindungsgemäßes Rührreibschweißwerkzeug 1. Wieder ist die Schulter 3 gänzlich durch ein ringförmiges, erstes Teil 5 aus einer Molybdän-Legierung gebildet, während der Pin 2 und ein Teilbereich des Schaftes 4 durch ein aus Wolfram-Rhenium gebildetes zweites Teil 6 gebildet sind. Im Unterschied zu dem in Fig. 1 dargestellten Rührreibschweißwerkzeug 1 ist der Schaft 4 hier allerdings nur teilweise durch das zweite Teil 6 und teilweise durch ein drittes Teil 8 aus einem dritten Material gebildet, welches dritte Material beispielsweise in Bezug auf Herstellungskosten günstiger als Wolfram-Rhenium sein kann.

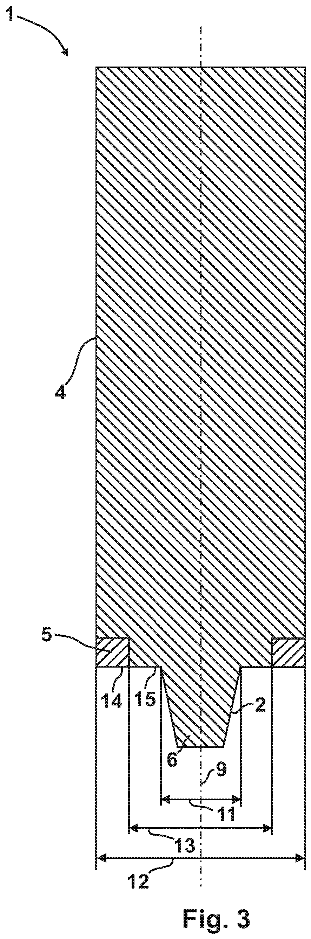

Fig. 3 zeigt ein weiteres Ausführungsbeispiel eines erfindungsgemäßen Rührreibschweißwerkzeuges 1. Bei diesem Ausführungsbeispiel erstreckt sich das erste Teil 5 nicht über die gesamte Schulter 3, sondern bildet nur einen ersten Teilbereich 14 der Schulter 3, sodass ein zweiter Teilbereich 15 der Schulter 3 durch das zweite Teil 6 gebildet ist, durch welches auch der Pin 2 gebildet ist. Nur ein äußerer erster Teilbereich 14 der Schulter 3 ist somit durch das erste Teil 5, welches auch hier ringförmig ausgebildet ist und aus einer Molybdän-Legierung besteht, gebildet. Der ringförmige erste Teil 5 erstreckt sich daher hier vom Schulter-Außendurchmesser 12 nicht bis zum Pin 2 bzw. nicht bis zum Pin-Außendurchmesser 11, sondern nur bis zu einem Innendurchmesser 13, welcher etwa mittig zwischen einem Schulter-Innendurchmesser 13 und dem Schulter-Außendurchmesser 12 liegt. Der Schulter-Innendurchmesser 13 entspricht auch hier dem Pin-Außendurchmesser 11. Somit kann durch Veränderung des Innendurchmessers 13 des ersten Teiles 5 bzw. durch Veränderung des durch das erste Material gebildeten ersten Teilbereiches 14 und des durch das zweite Material gebildeten zweiten Teilbereiches 15 der Schulter 3 ein gewünschter mittlerer Gleitreibungskoeffizient der Schulter 3, welcher sich bei Einsatz an einem Grundwerkstoff wie beispielsweise Stahl ergibt, beliebig zwischen einem ersten Gleitreibungskoeffizienten einer Werkstoffpaarung des ersten Materials mit dem Grundwerkstoff und einem zweiten Gleitreibungskoeffizienten einer Materialpaarung des zweiten Materials mit dem Grundwerkstoff eingestellt werden. Im Ausführungsbeispiel ist der erste Gleitreibungskoeffizient der Materialpaarung Molybdän-Legierung mit Stahl geringer als der zweite Gleitreibungskoeffizient der Materialpaarung Wolfram-Rhenium mit Stahl, sodass bei dem in Fig. 3 dargestellten Ausführungsbeispiel im Bereich der Schulter 3 ein mittlerer Gleitreibungskoeffizient erreicht wird, welcher höher als der Gleitreibungskoeffizient der Materialpaarung Molybdän-Legierung mit Stahl und geringer als der Gleitreibungskoeffizient der Materialpaarung Wolfram-Rhenium mit Stahl ist.

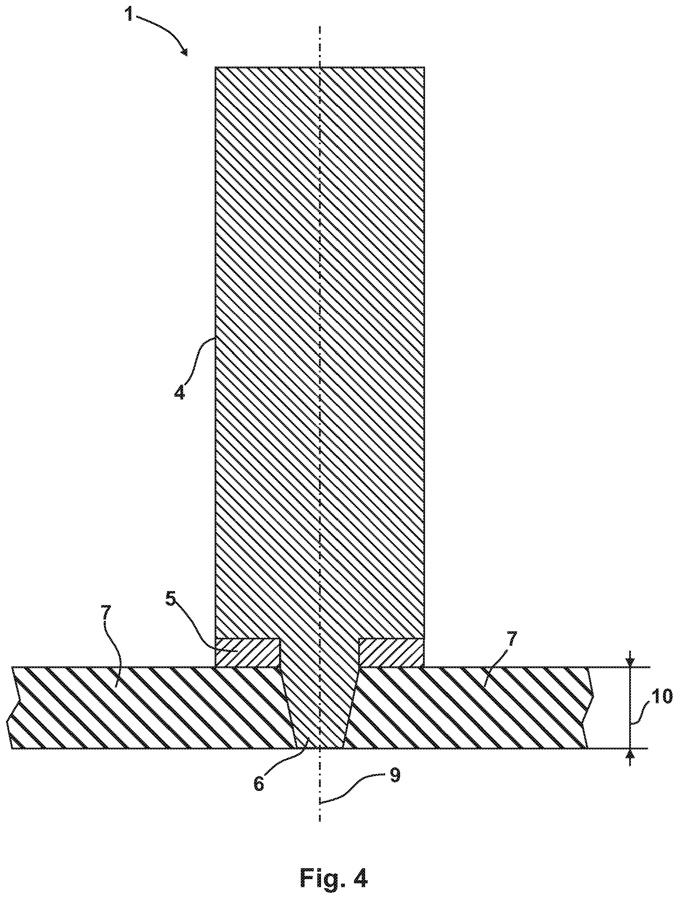

Fig. 4 zeigt ein Rührreibschweißwerkzeug 1 nach Fig. 1 beim Verschweißen zweiter Bauteile 7 wieder in Schnittdarstellung. Wie ersichtlich erstreckt sich der Pin 2 im Wesentlichen über eine gesamte Wandstärke 10 der hier beispielsweise plattenförmig ausgebildeten Bauteile 7, welche aus einem Stahl, vorzugsweise einem Pipelinestahl, bestehen und eine Schmelztemperatur von mehr als 900 °C aufweisen. Durch Einsatz des ersten Materials im Bereich der Schulter 3 wird im Bereich der Schulter 3 ein geringerer Gleitreibungskoeffizient als im Bereich des Pins 2 erreicht, sodass im Bereich des Pins 2 ein vorteilhaft starkes Verrühren der Grundwerkstoffe der Bauteile 7 erreicht wird, während eine vergleichsweiße geringe Wärmeeinbringung über die Schulter 3 erfolgt.

Das ringförmige erste Teil 5, aus welchem die Schulter 3 in den in Fig. 1 bis Fig. 4 dargestellten Ausführungsbeispielen zumindest teilweise gebildet ist, ist in den Ausführungsbeispielen mittels eines Reibschweißverfahrens mit dem zweiten Teil 6 verbunden, welches den Pin 2 und zumindest einen Teilbereich des Schaftes 4 bildet.

Dadurch ergibt sich eine starre, stabile Verbindung, wodurch auch sichergestellt ist, dass zwischen dem ersten Teil 5 und dem zweiten Teil 6 kein Spalt besteht und somit kein plastifiziertes Material aus der Schweißnaht in einen solchen Spalt eindringen kann, wie dies bei einem mehrteiligen Rührreibschweißwerkzeug 1 der Fall wäre, bei welchem beispielsweise die Schulter 3 mit einer geringeren Geschwindigkeit als der Pin 2 rotiert.

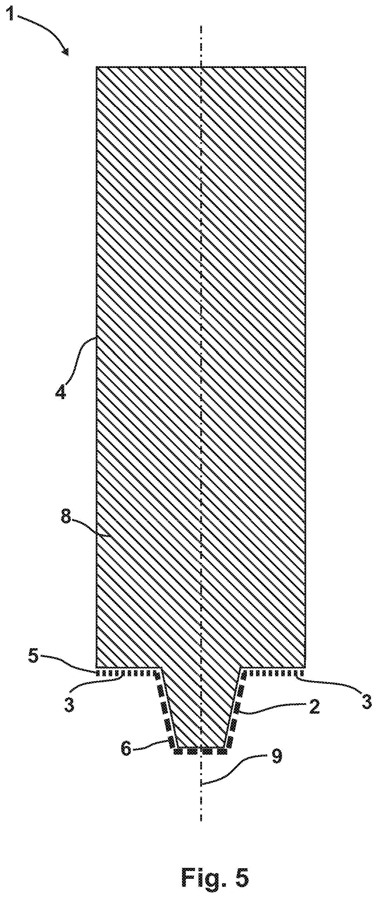

Fig. 5 bis 7 zeigen weitere Ausführungsbeispiele eines erfindungsgemäßen Rührreibschweißwerkzeuges 1 in Schnittdarstellung. Bei diesen Ausführungsbeispielen sind die Schulter 3 und der Pin 2 eines im Wesentlichen aus einem dritten Material bestehenden Rührreibschweißwerkzeuges 1 zumindest teilweise mit unterschiedlichen Materialien beschichtet, um bei Durchführung eines Rührreibschweißverfahrens unterschiedliche Reibeigenschaften im Bereich des Pins 2 und im Bereich der Schulter 3 zu erreichen. Dabei kann das Rührreibschweißwerkzeug 1 im Wesentlichen aus einem dritten Material bestehen und lediglich im Bereich der Schulter 3 und im Bereich des Pins 2 wie dargestellt beschichtet sein, um in diesen Teilbereichen die gewünschten Eigenschaften zu erreichen. Bei dem in Fig. 5 dargestellten Ausführungsbeispiel ist eine die Schulter 3 bildende Oberfläche dabei vollständig mit einem ersten Material und eine den Pin 2 bildende Oberfläche vollständig mit einem zweiten Material beschichtet. Das erste Teil 5 ist somit bei dem in Fig. 5 dargestellten Ausführungsbeispiel als Beschichtung im Bereich der Schulter 3 ausgebildet und das zweite Teil 6 als Beschichtung im Bereich des Pins 2 ausgebildet, wobei das erste Teil 5 beispielsweise wiederum aus einer Molybdän-Legierung und das zweite Teil 6 wieder aus einer Wolfram-Legierung bestehen kann.

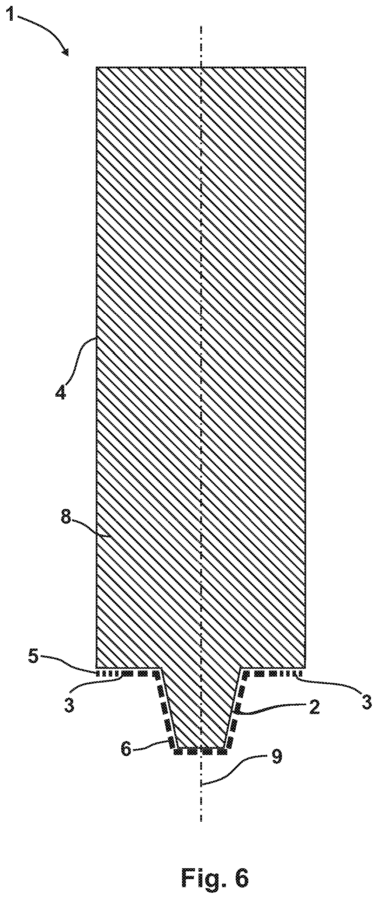

In der in Fig. 6 dargestellten Ausführungsform bedeckt das ebenfalls durch eine Beschichtung gebildete erste Teil 5 eine Oberfläche im Bereich der Schulter 3 nur teilweise. Ein nicht durch die aus dem ersten Material bestehende Beschichtung bzw. ein nicht durch das erste Teil 5 gebildeter Teilbereich der Schulter 3 wird hier durch eine aus dem zweiten Material gebildete Beschichtung bzw. ein zweites Teil 6 gebildet, welches zweite Teil 6 auch eine Oberfläche des Pins 2 bildet. Auf diese Weise kann wieder ein Gleitreibungskoeffizient der Schulter 3 erreicht werden, welcher zwischen dem ersten Gleitreibungskoeffizienten und dem zweiten Gleitreibungskoeffizienten liegt.

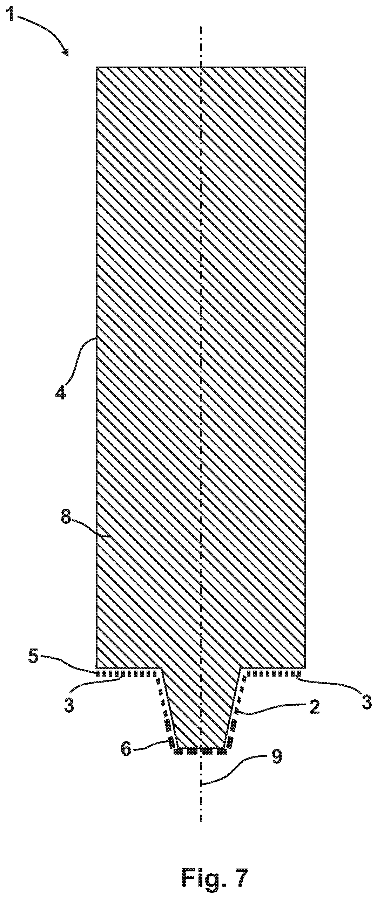

Fig. 7 zeigt eine weitere Ausführungsform, bei welcher eine Oberfläche im Bereich der Schulter 3 durch ein aus einem ersten Material bestehendes erstes Teil 5 gebildet ist, welches erste Teil 5 als Beschichtung ausgebildet ist. Eine Oberfläche des Pins 2 ist hier teilweise mit dem ersten Material und teilweise mit dem zweiten Material beschichtet, um hier Eigenschaften zu erreichen, welche zwischen den Eigenschaften des ersten Materials und den Eigenschaften des zweiten Materials liegen.

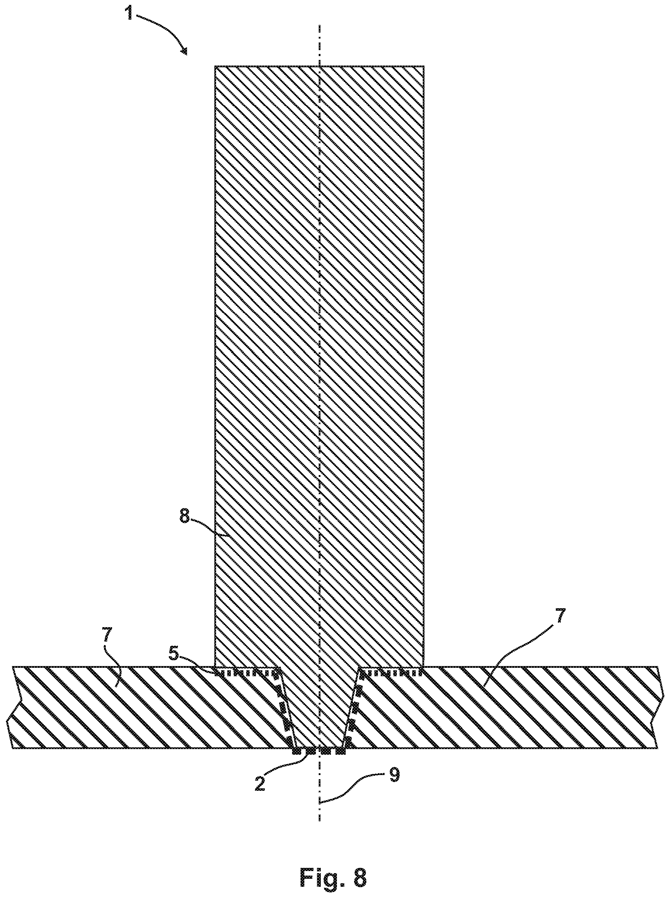

Fig. 8. zeigt den Einsatz eines Rührreibschweißwerkzeuges 1 gemäß Fig. 5 während eines Verfahrens zum Verbinden entsprechender Bauteile 7 wieder in Schnittdarstellung.

Wie in den Fig. 5 bis 8 ersichtlich kann das Rührreibschweißwerkzeug 1 somit auch im Wesentlichen durch ein drittes Material bzw. ein drittes Teil 8 gebildet sein, welches endseitig im Bereich der Schulter 3 und des Pins 2 mit einem ersten Material, welches ein erstes Teil 5 bildet, und einem zweiten Material, welches ein zweites Teil 6 bildet, beschichtet ist, um entsprechende Eigenschaften zu erreichen. Im Unterschied zu den in Fig. 1 bis 4 dargestellten Ausführungsbeispielen werden bei den in Fig. 5 bis 8 dargestellten Ausführungsbeispielen die Konturen des ersten Teiles 5 und des zweiten Teiles 6 somit erst während der Herstellung des Rührreibschweißwerkzeuges 1 gebildet, und zwar durch das Beschichten einer Oberfläche des dritten Teiles 8.

Bevorzugt wird ein entsprechendes Werkzeug eingesetzt, um Baustahl, insbesondere höhere und höchstfeste Stähle, sowie dickwandige Rohre, welche beispielsweise aus einem Baustahl bestehen und eine Wandstärke 10 von mehr als 10 mm aufweisen können, entlang einer in Umfangsrichtung verlaufenden Schweißnaht miteinander zu verschweißen, welche Rohre beispielsweise für eine Pipeline in großer Tiefe eingesetzt werden können. Auch dickwandige Rohre aus Stahl können somit ohne Werkzeugtausch mit einem einzigen Rührreibschweißwerkzeug 1 verschweißt werden, wodurch eine entsprechende Pipeline auf besonders kostengünstige Weise herstellt werden kann.

## Patentansprüche

1. Rührreibschweißwerkzeug (1), welches einen Pin (2) und eine starr mit dem Pin (2) verbundene Schulter (3) aufweist, zum Verschweißen von aus einem durch einen Stahl gebildeten Grundwerkstoff mit einem Schmelzpunkt von mehr als 900 °C bestehenden Bauteilen (7), welches Rührreibschweißwerkzeug (1) insbesondere in einem Verfahren nach einem der Ansprüche 6 bis 15 gebildet ist, wobei die Schulter (3) zumindest teilweise aus einem ersten Material besteht und der Pin (2) zumindest teilweise aus einem zweiten Material besteht, **dadurch gekennzeichnet, dass** eine Werkstoffpaarung des ersten Materials mit dem Grundwerkstoff einen ersten Gleitreibungskoeffizienten aufweist und eine Werkstoffpaarung des zweiten Materials mit dem Grundwerkstoff einen zweiten Gleitreibungskoeffizienten aufweist, wobei der erste Gleitreibungskoeffizient geringer ist als der zweite Gleitreibungskoeffizient.

2. Rührreibschweißwerkzeug (1) nach Anspruch 1, **dadurch gekennzeichnet, dass** das Rührreibschweißwerkzeug (1) einen Schaft (4) aufweist, welcher ein drittes Material aufweist, insbesondere durch ein drittes Material gebildet ist.

3. Rührreibschweißwerkzeug (1) nach Anspruch 1 oder 2, **dadurch gekennzeichnet, dass** das erste Material Molybdän enthält, insbesondere als Molybdän-Legierung ausgebildet ist und/oder dass das zweite Material Wolfram enthält, insbesondere durch Wolfram-Rhenium gebildet ist.

4. Rührreibschweißwerkzeug (1) nach einem der Ansprüche 1 bis 3, **dadurch gekennzeichnet, dass** das erste Material und/oder das zweite Material einen Keramikwerkstoff, insbesondere einen Oxid-Keramikwerkstoff und/oder einen Nicht-Oxid-Keramikwerkstoff wie Carbide, Nitride oder Silicide, aufweist oder durch einen solchen Werkstoff gebildet ist.

5. Rührreibschweißwerkzeug (1) nach einem der Ansprüche 1 bis 4, **dadurch gekennzeichnet, dass** das erste Material und/oder das zweite Material ein Refraktärmetall, eine Refraktärmetalllegierung, eine Nickellegierung, eine Cobaltlegierung und/oder eine Eisenlegierung aufweist oder durch einen solchen Werkstoff gebildet ist.

6. Verfahren zur Herstellung eines Rührreibschweißwerkzeuges (1) mit einem Pin (2) und einer Schulter (3), mit welchem Bauteile (7) aus einem durch einen Stahl, insbesondere einen Baustahl, gebildeten Grundwerkstoff, welcher Grundwerkstoff eine Schmelztemperatur von mehr als 900 °C aufweist, mittels Rührreibschweißen verbindbar sind, insbesondere zur Herstellung eines Rührreibschweißwerkzeuges (1) nach einem der Ansprüche 1 bis 5, wobei ein erstes Teil (5), welches aus einem ersten Material besteht, mit einem zweiten Teil (6), welches aus einem zweiten Material besteht, starr verbunden wird, sodass zumindest ein Teilbereich der Schulter (3) durch das erste Material gebildet wird und zumindest ein Teilbereich des Pins (2) durch das zweite Material gebildet wird, **dadurch gekennzeichnet, dass** eine Werkstoffpaarung des ersten Materials mit dem Grundwerkstoff einen ersten Gleitreibungskoeffizienten aufweist und eine Werkstoffpaarung des zweiten Materials mit dem Grundwerkstoff einen zweiten Gleitreibungskoeffizienten aufweist, wobei der erste Gleitreibungskoeffizient geringer ist als der zweite Gleitreibungskoeffizient.

7. Verfahren nach Anspruch 6, **dadurch gekennzeichnet, dass** das erste Teil (5) stoffschlüssig mit dem zweiten Teil (6) verbunden wird, wobei bevorzugt das erste Teil (5) mit dem zweiten Teil (6) verschweißt wird.

8. Verfahren nach Anspruch 6 oder 7, **dadurch gekennzeichnet, dass** das erste Teil (5) durch ein Reibschweißverfahren mit dem zweiten Teil (6) verbunden wird.

9. Verfahren nach einem der Ansprüche 6 bis 8, **dadurch gekennzeichnet, dass** das erste Teil (5) mit dem zweiten Teil (6) durch ein Pressschweißverfahren verbunden wird.

10. Verfahren nach einem der Ansprüche 6 bis 9, **dadurch gekennzeichnet, dass** abhängig von einem gewünschten mittleren Gleitreibungskoeffizienten, welcher bei einem Kontakt der Schulter (3) mit dem Grundwerkstoff wirkt und zwischen einem ersten Gleitreibungskoeffizienten, welchen eine Werkstoffpaarung des ersten Materials mit dem Grundwerkstoff aufweist, und einem zweiten Gleitreibungskoeffizienten, welchen eine Werkstoffpaarung des zweiten Materials mit dem Grundwerkstoff aufweist, liegt, ein erster Teilbereich (14) der Schulter (3) durch das erste Material und ein zweiter Teilbereich (15) der Schulter (3) durch das zweite Material gebildet werden, um den gewünschten mittleren Gleitreibungskoeffizienten zu erreichen.

11. Verfahren nach einem der Ansprüche 6 bis 10, **dadurch gekennzeichnet, dass** vor einem Verbinden des ersten Teiles (5) mit dem zweiten Teil (6) das erste Teil (5) mit einer Kontur gebildet wird, welche mit dem Teilbereich der Schulter (3) korrespondiert, welcher aus dem ersten Material gebildet wird.

12. Verfahren nach einem der Ansprüche 6 bis 11, **dadurch gekennzeichnet, dass** das erste Teil (5) eine im Wesentlichen rotationssymmetrische Außenkontur aufweist, insbesondere etwa ringförmig ausgebildet ist.

13. Verfahren zum Verbinden von Bauteilen (7) aus einem durch einen Stahl, insbesondere einen Baustahl, gebildeten Grundwerkstoff oder mehreren durch einen Stahl, insbesondere einen Baustahl, gebildeten Grundwerkstoffen mit einer Schmelztemperatur von mehr als 900 °C durch Rührreibschweißen, **dadurch gekennzeichnet, dass** ein Rührreibschweißwerkzeug (1) nach einem der Ansprüche 1 bis 5 zum Verbinden dieser Bauteilen (7) eingesetzt wird.

14. Verfahren nach Anspruch 13, **dadurch gekennzeichnet, dass** die Bauteile (7) rohrförmig ausgebildet sind.

15. Verfahren nach Anspruch 13 oder 14, **dadurch gekennzeichnet, dass** die Bauteile (7) eine Wandstärke (10) von mehr als 10 mm aufweisen.

## Claims

1. A friction stir welding tool (1), which has a pin (2) and a shoulder (3) connected rigidly to the pin (2), for welding components (7) consisting of a parent material that is composed of steel and has a melting point of more than 900°C, wherein said friction stir welding tool (1) particularly is produced in a method according to one of claims 6 to 15, and wherein the shoulder (3) consists at least partially of a first material and the pin (2) consists at least partially of a second material, **characterized in that** a material pairing of the first material with the parent material has a first coefficient of sliding friction and a material pairing of the second material with the parent material has a second coefficient of sliding friction, wherein the first coefficient of sliding friction is lower than the second coefficient of sliding friction.

2. The friction stir welding tool (1) according to claim 1, **characterized in that** the friction stir welding tool (1) has a shaft (4) that contains a third material, particularly is composed of a third material.

3. The friction stir welding tool (1) according to claim 1 or 2, **characterized in that** the first material contains molybdenum, particularly is realized in the form of a molybdenum alloy, and/or **in that** the second material contains tungsten, particularly is composed of tungsten-rhenium.

4. The friction stir welding tool (1) according to one of claims 1 to 3, **characterized in that** the first material and/or the second material contains a ceramic material, particularly an oxide ceramic material and/or a nonoxide ceramic material such as carbides, nitrides or silicides or is composed of such a material.

5. The friction stir welding tool (1) according to one of claims 1 to 4, **characterized in that** the first material and/or the second material contains a refractory metal, a refractory metal alloy, a nickel alloy, a cobalt alloy and/or an iron alloy or is composed of such a material.

6. A method for producing a friction stir welding tool (1) that has a pin (2) and a shoulder (3), which friction stir welding tool is capable of connecting components (7) consisting of a parent material that is composed of steel, particularly construction steel, and has a melting temperature of more than 900°C by means of friction stir welding, particularly for producing a friction stir welding tool (1) according to one of claims 1 to 5, wherein a first part (5), which consists of a first material, is connected rigidly to a second part (6), which consists of the second material, such that at least a section of the shoulder (3) is composed of the first material and at least a section of the pin (2) is composed of the second material, **characterized in that** a material pairing of the first material with the parent material has a first coefficient of sliding friction and a material pairing of the second material with the parent material has a second coefficient of sliding friction, wherein the first coefficient of sliding friction is lower than the second coefficient of sliding friction.

7. The method according to claim 6, **characterized in that** the first part (5) is connected integrally to the second part (6), wherein the first part (5) preferably is welded to the second part (6).

8. The method according to claim 6 or 7, **characterized in that** the first part (5) is connected to the second part (6) by means of a friction welding process.

9. The method according to one of claims 6 to 8, **characterized in that** the first part (5) is connected to the second part (6) by means of a pressure welding process.

10. The method according to one of claims 6 to 9, **characterized in that**, depending on a desired average coefficient of sliding friction that acts during a contact of the shoulder (3) with the parent material and lies between a first coefficient of sliding friction of a material pairing of the first material with the parent material and a second coefficient of sliding friction of a material pairing of the second material with the parent material, a first section (14) of the shoulder (3) is composed of the first material and a second section (15) of the shoulder (3) is composed of the second material in order to achieve the desired average coefficient of sliding friction.

11. The method according to one of claims 6 to 10, **characterized in that** the first part (5) is produced with a contour that corresponds to the section of the shoulder (3) composed of the first material prior to connecting the first part (5) to the second part (6).

12. The method according to one of claims 6 to 11, **characterized in that** the first part (5) essentially has a rotationally symmetrical outer contour, particularly an approximately annular design.

13. A method for connecting components (7) consisting of a parent material or multiple parent materials that is/are composed of steel, particularly construction steel, and has/have a melting temperature of more than 900°C by means of friction stir welding, **characterized in that** a friction stir welding tool (1) according to one of claims 1 to 5 is used for connecting these components (7).

14. The method according to claim 13, **characterized in that** the components (7) have a tubular design.

15. The method according to claim 13 or 14, **characterized in that** the components (7) have a wall thickness (10) of more than 10 mm.

## Revendications

1. Outil de soudage par friction-malaxage (1), lequel comporte un pion (2) et u épaulement (3) relié fermement au pion (2), pour souder des composants (7) composés d'un matériau de base formé par un acier avec un point de fusion de plus de 900° C, lequel outil de soudage par friction-malaxage (1) est en particulier formé dans un procédé selon l'une quelconque des revendications 6 à 15, sachant que l'épaulement (3) est composé au moins en partie d'un premier matériau et le pion (2) est composé au moins en partie d'un deuxième matériau, **caractérisé en ce qu'**une combinaison de matières du premier matériau avec le matériau de base comporte un premier coefficient de frottement de glissement et une combinaison de matières du deuxième matériau avec le matériau de base comporte un deuxième coefficient de frottement de glissement, sachant que le premier coefficient de frottement de glissement est plus faible que le deuxième coefficient de frottement de glissement.

2. Outil de soudage par friction-malaxage (1) selon la revendication 1, **caractérisé en ce que** l'outil de soudage par friction-malaxage (1) comporte une queue (4), laquelle comporte un troisième matériau, qui est en particulier formée par un troisième matériau.

3. Outil de soudage par friction-malaxage (1) selon la revendication 1 ou 2, **caractérisé en ce que** le premier matériau contient du molybdène, est en particulier constitué sous forme d'alliage de molybdène et/ou **en ce que** le deuxième matériau contient du tungstène, est en particulier constitué par du tungstène-rhénium.

4. Outil de soudage par friction-malaxage (1) selon l'une quelconque des revendications 1 à 3, **caractérisé en ce que** le premier matériau et/ou le deuxième matériau comporte un matériau céramique, en particulier un matériau céramique oxydé et/ou un matériau céramique non oxydé comme le carbure, le nitrure ou le silicide ou est formé d'un matériau de ce type.

5. Outil de soudage par friction-malaxage (1) selon l'une quelconque des revendications 1 à 4, **caractérisé en ce que** le premier matériau et/ou le deuxième matériau comporte un métal réfractaire, un alliage de métaux réfractaires, un alliage de nickel, un alliage de cobalt et/ou un alliage de fer ou est formé d'un matériau de ce type.

6. Procédé de fabrication d'un outil de soudage par friction-malaxage (1) avec un pion (2) et un épaulement (3), avec lequel des composants (7), dans un matériau de base formé par un acier, en particulier un acier de construction, lequel matériau de base comporte une température de fusion de plus de 900° C, peuvent être reliés au moyen du soudage par friction-malaxage, en particulier pour la fabrication d'un outil de soudage par friction-malaxage (1) selon l'une quelconque des revendications 1 à 5, sachant qu'une première pièce (5), laquelle est composée d'un premier matériau, est fermement reliée à une deuxième pièce (6), laquelle est composée d'un deuxième matériau de telle manière qu'au moins une zone partielle de l'épaulement (3) est formée par le premier matériau et au moins une zone partielle du pion (2) est formée par le deuxième matériau, **caractérisé en ce qu'**une combinaison de matières du premier matériau avec le matériau de base comporte un premier coefficient de frottement de glissement et une combinaison de matières du deuxième matériau avec le matériau de base comporte un deuxième coefficient de frottement de glissement, sachant que le premier coefficient de frottement de glissement est plus faible que le deuxième coefficient de frottement de glissement.

7. Procédé selon la revendication 6, **caractérisé en ce que** la première pièce (5) est reliée par conformité de forme à la deuxième pièce (6), sachant de préférence que la première pièce (5) est soudée à la deuxième pièce (6).

8. Procédé selon la revendication 6 ou 7, **caractérisé en ce que** la première pièce (5) est reliée à la deuxième pièce (6) par un procédé de soudage par friction.

9. Procédé selon l'une quelconque des revendications 6 à 8, **caractérisé en ce que** la première pièce (5) est reliée à la deuxième pièce (6) par un procédé de soudage par pression.

10. Procédé selon l'une quelconque des revendications 6 à 9, **caractérisé en ce qu'**en fonction d'un coefficient de frottement de glissement moyen souhaité, lequel agit lors d'un contact de l'épaulement (3) avec le matériau de base, et se situe entre un premier coefficient de frottement de glissement, lequel comporte une combinaison de matières du premier matériau avec le matériau de base, et un deuxième coefficient de frottement de glissement, lequel comporte une combinaison de matières du deuxième matériau avec le matériau de base, une première zone partielle (14) de l'épaulement (3) est formée par le premier matériau et une deuxième zone partielle (15) de l'épaulement (3) par le deuxième matériau, pour obtenir le coefficient de frottement de glissement moyen souhaité.

11. Procédé selon l'une quelconque des revendications 6 à 10, **caractérisé en ce qu'**avant une liaison de la première pièce (5) avec la deuxième pièce (6), la première pièce (5) est formée avec un profil, lequel correspond à la zone partielle de l'épaulement (3), laquelle est formée dans le premier matériau.

12. Procédé selon l'une quelconque des revendications 6 à 11, **caractérisé en ce que** la première pièce (5) comporte un profil extérieur pour l'essentiel symétrique en rotation, en particulier de forme à peu près annulaire.

13. Procédé de liaison de composants (7) dans un matériau de base formé par un acier, en particulier un acier de construction ou de plusieurs matériaux de base formés par un acier, en particulier un acier de construction avec une température de fusion de plus de 900° C par soudage de friction-malaxage, **caractérisé en ce qu'**un outil de soudage par friction-malaxage (1) selon l'une quelconque des revendications 1 à 5 est utilisé pour relier ces composants (7).

14. Procédé selon la revendication 13, **caractérisé en ce que** les composants (7) sont constitués de forme tubulaire.

15. Procédé selon la revendication 13 ou 14, **caractérisé en ce que** les composants (7) comportent une épaisseur de paroi (10) de plus de 10 mm.
